# EUROPEAN PATENT APPLICATION

(11) **EP 4 734 448 A1**
(43) Date of publication of application: **29.04.2026**
(21) Application number: 25210348.6
(22) Date of filing: 22.10.2025
(51) Int. Cl.: H04L 9/40, H04L 65/1045, H04L 67/56, H04L 45/00

(54) **INTELLIGENT PACKET ROUTING IN NETWORK EDGE DEVICES FOR SOFTWARE-DEFINED CLOUD NETWORKS**

(30) Priority: 22.10.2024 US 202418922971
(71) Applicant: Google LLC, Mountain View, CA 94043 (US)
(72) Inventor: Fahs, Brian Matthew, Mountain View, California 94043 (US); Elaawar, Nasser Nabih, Mountain View, California 94043 (US); Bhattacharya, Arka Aloke, Mountain View, California 94043 (US); Jackson, Christopher, Mountain View, California 94043 (US); Raghavan, Aditya, Mountain View, California 94043 (US)
(74) Representative: Betten & Resch

(57) **Abstract**

A customer gains access to cloud networking resources through a customer device, such as a router providing a point of presence (POP) to the network. Due to limitations of remote equipment such as routers, complete routing information for data packets may not be available from the origin due to the dynamic nature of the network and security requirements. Proxy machines are placed at the network edge that serve as a proxy for routing network data packets to the virtual network Placing proxy machines at the network edge requires space, power and maintenance of the programmable processing machines serving as proxies. Techniques for bypassing proxy machines to reduce network congestion and latency are described. Data packets are selected to bypass proxies when additional routing information is not needed for the packet. Proxy machines may be implemented as virtual machines within a data center hosting the virtual network.

## Description

### BACKGROUND

Cloud computing relies on networks distributed across wide geographic regions. In fact, cloud computing resources can be delivered on a global scale. Data centers having tremendous processing capacity do much of the processing of data through the cloud network. Users of the cloud network may be situated remotely from the data center, with the user's point of presence (POP) being placed at the network edge. Some network traffic is routed through the network by equipment located at the network edge. In some cases, these network devices do not have sufficient memory or processing capabilities to provide complete routing information for network data packets. For this reason, programmable standalone proxy machines are situated near the data center at the network edge. Traffic from the user is forwarded to the proxy machine, which in turn sends the data to the data center. Likewise, processed data being returned to the user, is sent to the proxy machine, which identifies the proper recipients and routes the processed data to the user. Standalone proxy machines are housed in facilities requiring power, communication, and climate control. The cloud provider must therefore acquire access to real estate and provide standalone machines and their accompanying processing needs. The extra hops needed to transmit data and the attendant costs of maintaining proxy machine facilities add cost and latency to network operations.

Cloud computing networks provide services to a customer. These services are processed in virtual networks that may be remote from the customer. The customer gains access to the virtual network through a customer device, such as a router that provides the customer's POP in the network. Due to limitations of remote equipment such as routers, full routing information for data packets may not be available from the originating router. Factors including but not limited to the dynamic nature of the network and security requirements contribute to the limitations of the local devices from providing full routing information. To address these limitations, programmable processors are placed at the network edge that serve as a proxy for routing network data packets from the customer to the virtual network hosted at data centers that may be distributed on a global level.

Placing proxy machines at the network edge requires space, power and maintenance of the programmable processing machines serving as proxies.

### BRIEF SUMMARY

The technology is generally directed to providing cloud computing services. Overcoming the limitations of remote devices at the customer POP while limiting or eliminating the need for proxy machines can make the network less expensive and nimbler for providing services to multiple customers across the network. The disclosed technology generates full routing information for data packets leaving the virtual network. The data packets can be routed directly to the customer device located at the network edge either in a region associated with the cloud network, or a remote location without an associated region.

The disclosed solutions further provide network control that can observe data packets coming from the customer device and determine if the data packets require additional processing from a proxy in order to complete the routing information for the data packet. Where additional processing is required, the data packet is forwarded to the proxy machines to complete processing of the routing information. When the data packet does not require additional routing information, the data packet is transmitted directly to the network host, bypassing the proxy machines at the network edge.

According to certain aspects of the technology, the function of the proxy machines is placed within a managed data center implemented as virtual machines. The customer data packets are sent directly to a network data center where the packets can be processed with required routing information for getting the data packets to their intended destination.

The described technology includes a cloud networking architecture having a physical routing device, a remote host hosting a virtual network, and a proxy machine for facilitating communication between the physical routing device and the remote host allowing routing of network traffic if the physical routing device has limitations that prevents complete routing information being available at the origination of the network traffic, wherein the remote host is configured to route network communications from the virtual network to the physical routing device without passing through the proxy machine if processing of the proxy machine is not required to provide the complete routing information. The cloud network architecture may further include a network control module configured to observe network traffic from the physical routing device and calculate routing information and configure routing for sending a first portion of the network traffic to the remote host and a second portion of the network traffic to the proxy machine.

The network control module can assign network traffic based on a flow capacity to a data center where the remote host is located and, in some cases, direct significant percentages of network traffic directly from the physical routing device to the remote network hosts with the remainder of the network traffic directed to the proxy machines. The network control module can add or remove network flows during network operations.

In some aspects of the disclosed technology, the cloud network architecture includes a virtual machine running on the remote host, the virtual machine associated with a particular user. The remote host may be housed in a managed data center. The proxy machine may be placed in the managed data center as a plurality of shared virtual machines.

A method of routing cloud network traffic includes in a cloud network host, routing packets directly from the cloud network host to a remotely located physical routing device at a customer POP, in a network control module, observing packets from the physical routing device, and in the network control module, calculating routing information and configuring routing for a first portion of the received packets directly to the network host containing workload(s) for the cloud network. A remaining second portion of the received packets can be directed to a proxy associated with the cloud network. In some instances, the remaining second portion of the received packets can be routed to a proxy located in a data center. The proxy can be a virtual machine running in the data center. Further, the proxy can be implemented in a plurality of shared virtual machines running in the data center. The first portion of the received packets can be selected based on a limitation of the remotely located physical routing device or based on traffic volume at the cloud network host.

Configuration of routing information required to route packets between local devices and individual hosts can be constrained such that dynamic configuration information within the cloud network can remain local to a region (or zone). Doing so may involve first tunneling traffic from a remote routing device where a customer connects to a local routing device near where the customer workloads are located and having the local routing device perform the routing to and from specific hosts (rather than the remote routing device). Doing so would localize the programming of the routing device that can maintain reliability properties about the system, e.g., where the remote device is unaffected by reliability problems local to the workload.

### BRIEF DESCRIPTION OF THE DRAWINGS

FIG. 1 is a diagram of a cloud networking environment according to aspects of the disclosed technology.
FIG. 2 is a diagram of a cloud networking environment that bypasses proxies on outgoing network traffic according to aspects of the disclosed technology.
FIG.3 is a diagram of a cloud networking environment according to aspects of the disclosed technology.
FIG. 4 is a diagram of a cloud networking environment that bypasses proxies on outgoing network traffic according to aspects of the disclosed technology.
FIG. 5 is a diagram of a cloud networking environment that bypasses proxies on outgoing network traffic and on some incoming network traffic according to aspects of the disclosed technology.
FIG. 6 is a diagram of a cloud networking environment that locates proxies in a managed data center according to aspects of the disclosed technology.
FIG. 7 is a diagram of a cloud networking environment that locates proxies in a managed data center according to aspects of the disclosed technology.
FIG. 8 is a diagram of a cloud networking environment according to aspects of the disclosed technology.
FIG. 9 is a block diagram of an example system according to aspects of the disclosure.
FIG. 10 is a block diagram illustrating network control of a cloud networking environment according to aspects of the disclosed technology.

### DETAILED DESCRIPTION

The technology described herein is generally directed to cloud networking. Cloud networking provides for computing resources, such as the provision of virtual machines to a remote customer for the processing of the customer's data. The network that makes up the cloud contains many networking components distributed across a wide geographic area. Local network equipment at the user location, such as peering fabrics (PFs) and routers receive data and provide routing information to the data packets to direct the packets to their intended destinations. At times, the local network equipment (PF) may have limitations with respect to computing power, memory limitations, or computational speed. These limitations make it impracticable to provide complete routing information to all data packets, while simultaneously maintaining satisfactory network latency and performance.

To overcome these deficiencies, dedicated computers are installed at the network edge to act as proxy machines. These machines have the capabilities needed to receive the network packets and provide complete routing capabilities to forward the packets to their destination in the network. Cloud operators must therefore provide space, power, maintenance among other requirements to maintain the proxy machines.

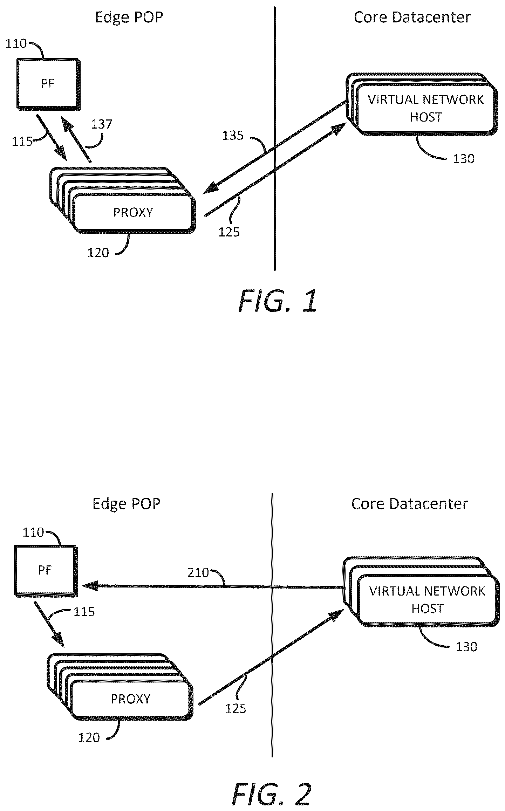

FIG. 1 is an illustration of a cloud networking environment. The cloud network is provided to a user through a virtual network running on a network host 130 within a managed data center. The customer accesses the network remotely from the data center at the network edge. The point at which the customer connects to the network is referred to as the customer's point of presence. The customer enters the network via a local networking device such as a router or PF 110. The PF 110 provides some portion of the needed routing information for a data packet and forwards the packet 115 to one or more proxy machines 120. The proxy machines 120 provide complete routing information and forward the packets 125 to the virtual network host 130.

Once at the virtual network, the data is processed within the virtual network using the available processing services provided by the virtual network. The processed data can then be returned to the customer. The virtual network host 130 sends the processed data packets 135 to the proxy machines, which forward the processed data packets 137 back to the customer connection to PF 110.

FIG. 2 is an illustration of a cloud networking environment according to one aspect of the disclosed technology. Similar to FIG. 1, the cloud network is provided to a user through a virtual network that is running on a host 130 within a managed data center. The customer accesses the network remotely from the data center at the network edge. The point at which the customer connects to the network is referred to as the customer's POP. The customer enters the network via a local networking device such as a router or PF 110. The PF 110 provides some portion of the needed routing information for a data packet and forwards the packet 115 to one or more proxy machines 120. The proxy machines 120 provide complete routing information and forward the packets 125 to the virtual network host 130.

Once in the virtual network, the data is processed within the virtual network using the available processing services provided by the virtual network. The processed data can then be returned to the customer. In the network of FIG. 2, the virtual network host 130 provides the complete routing information for the processed data packets to traverse the network regions and arrive at the customer's connection point to PF 110 at the network edge. The virtual network host 130 sends the processed data packets 210 directly to the customer's connection at PF 110 bypassing the proxy machines 120.

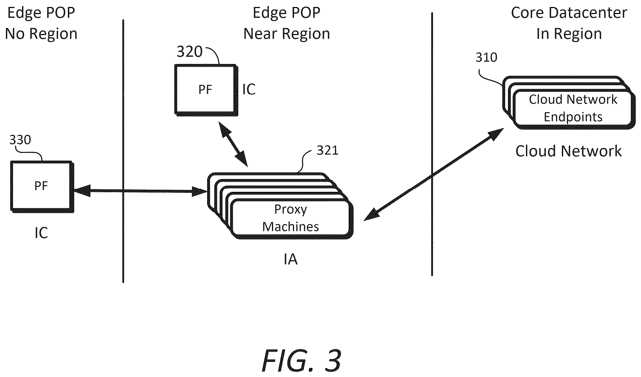

FIG. 3 illustrates a cloud network illustrating network traffic across network regions. The cloud network 310 provides network processing services to a customer that is isolated from other customers in a defined region of the cloud network. The cloud network 310 is located in a first local region containing the core data center. A local region of the cloud network 310, houses a number of proxy machines 321 that process routing information of network data packets going to and coming from the cloud network 310. Also, in the local region is a network device PF that provides an interconnect (IC) point for a customer 320. A cloud IC provides a customer with low latency, high availability connections to a customer's networks and the cloud networking resources of a cloud provider. The connection may be a direct physical connection between the customer and the cloud provider, or access to the cloud resources may be provided by a service provider who facilitates the connection between the customer's equipment and the cloud network. The remote PF 330 serves as an IC to the cloud network 310 and communicates data packets between the remote location 330 and the proxy machines 321 for additional routing information to enable bidirectional communication with the cloud network 310.

In some cases, a remote user connection to device PF 330 may be located outside of a defined cloud region providing an IC for the customer to the network. Alternatively, the customer POP may be associated with a different cloud region than the region containing proxy machines 321. The customer's configuration identifies an interconnect attachment (IA) point where the remote PF 330 can send data packets to be routed through the network. In the network of FIG. 3 remote PF 330 sends data packets to proxy machines 321 in the local region. From the proxy machines 321, the data packets are processed and encapsulated with routing information if needed and forwarded to the cloud network 310.

Hosts within the cloud network 310 process the data packets and return responses in the form of outgoing data packets. The outgoing data packets are sent to the proxy machines 321, and based on their ultimate destination, the data packets are forwarded to PF 320 in the local region or remote PF 330 as appropriate.

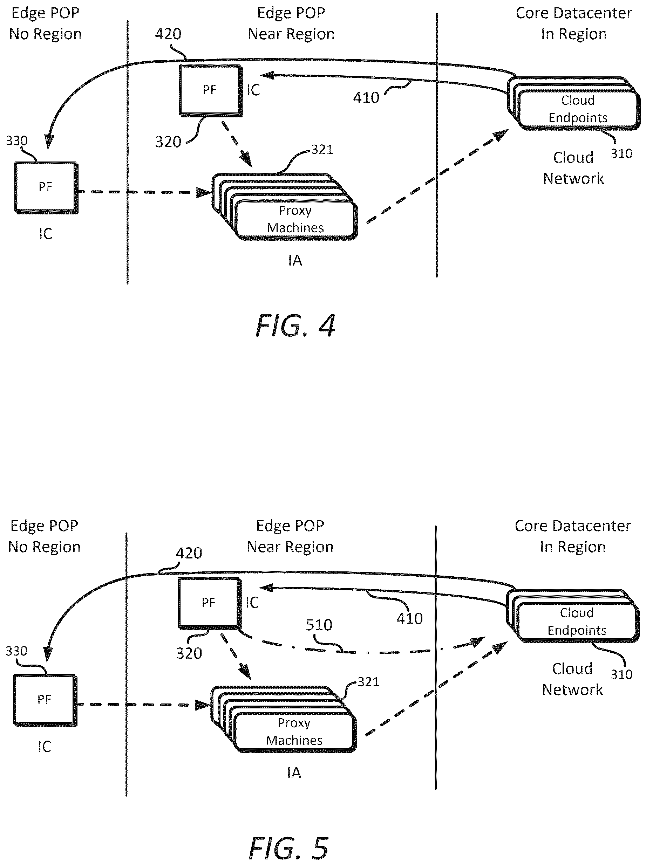

FIG. 4 illustrates the regional cloud network of FIG. 3 with direct egress of outgoing data packets according to aspects of the disclosed technology. Network traffic is directed to the cloud network 310 as described above in FIG. 3. Remote PF 330 and local region PF 320 direct their incoming data packets to the proxy machines 321 containing the proxy machines. The proxy machines forward the data packets to the cloud network 310. When network hosts associated with users generate data for distribution to leave the cloud network, the cloud network 310 provides the outgoing data packets with their complete routing information to get to their intended destination 320, 330. The cloud network 310 sends data packets intended for the remote PF 330 directly 420. Likewise, data packets intended for the PF 320 in the local region are sent directly 410 from the cloud network 310.

FIG. 5 illustrates the cloud network of FIG. 4 further including the direct transmission of some data packets 510 originating from PF 320 in the local region to the cloud network 310. For some data packets originating in local region PF 320, the PF has the capability to provide complete routing information for the packet. Accordingly, a subset of the originated data packets coming from local region PF 320 do not need to be further processed by a proxy machine at proxy machines 321. In these cases, the data packets having complete routing information are transferred directly 510 from the PF 320 in the local region to the cloud network 310. This partial bypass of the proxy machines creates less network traffic in the proxy machines 321 and reduces overall network latency due to routing the data packets through intermediate destinations. In some cases, a majority (e.g., over 50 percent) of the data packets originated in PF 320 of the local region may be directly transferred 510 to the correct network host in cloud network 310. The preceding percentage is provided by way of non-limiting example, in some cases the percentage of network traffic bypassing the proxy machines 321 can range from all to none of the network traffic. The ability to bypass the proxy machines where possible provides opportunity for cost savings and network efficiency.

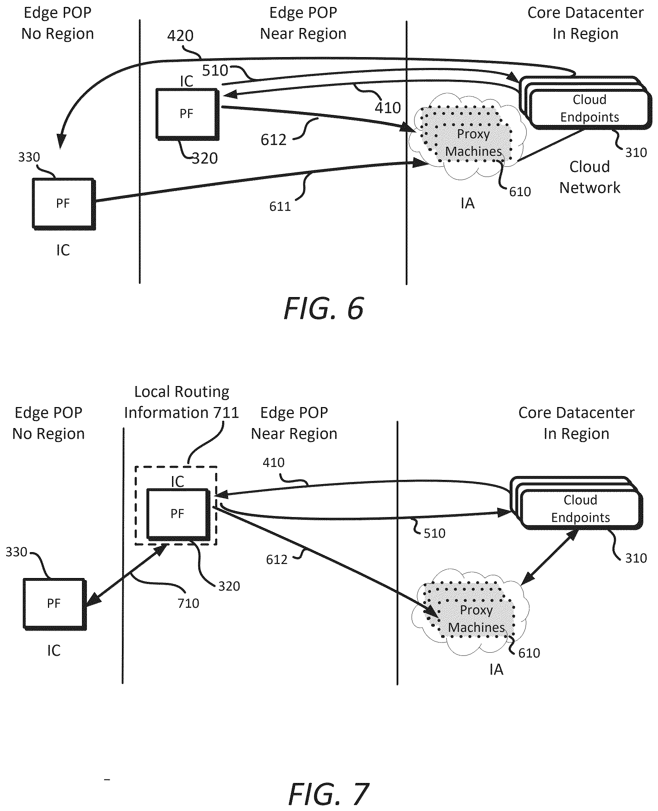

FIG. 6 shows a cloud network including virtual proxy machines that are housed within a data center. Operation of the cloud network of FIG. 6 works similarly to the flow of data described with respect to FIG. 5 above. In the network of FIG. 6, the proxy machines 610 are relocated from the network edge and housed within a managed data center. In this way, additional space and resources are not required for proxy machines separate from the data center. PF 330 located outside defined network regions transmits data packets 611 to the proxy machines 610 located in the data center. The proxy machines 610 process routing information to identify the appropriate network host and re-encapsulate the data packets to route the data packets to the correct network host. where needed to navigate the data packets to the cloud endpoints 310. In similar fashion, PF 320 within the edge region of the network forwards data packets 612 to the proxy machines 610 at the data center. The proxy machines in proxy machines 610 provide additional routing information where needed to navigate the data packets to cloud endpoints 310. The network hosts in cloud endpoints 310 process the data packets and create response data packets to return to their originating source. The cloud endpoints 310 can provide the routing information to the outgoing data packets and send the outgoing data packets 420 directly to remote PF 330 or send the outgoing data packets directly 410 to local PF 320.

FIG. 7 provides one example of a cloud network according to aspects of the disclosed technology. Network traffic 710 between cloud endpoints 310 and PF 330 can confine dynamic routing information related to bypassing proxy machines 610 to local routing information 711 to keep the dynamic nature local to the region of cloud endpoints 310. This local routing information may be retained in the local device (e.g., PF 320) and associated control systems and not transmitted to remote locations of PF 330.

A remote user connection such as PF 330 may use a local PF 320 to tunnel network traffic between cloud endpoints 310 and the remote location of PF 330. This allows local PF 320 which is local with the cloud endpoints 310 to tunnel all traffic for remote PF 330, as opposed to directly programming traffic to the cloud endpoints 310 via programming on remote PF 330. In this way, local dynamic information 711 involving the dynamically changing endpoints in the cloud endpoints 310 are constrained to the local region, and not transmitted on a global scale. Local routing information 711 can thereby be managed by local network control at the local PF 320. When the local network control experiences a problem or failure, the effect is limited to the local region and not introduced to remote PFs 330 on a global scale. This prevents local issues from creating cascading problems that may affect customers at other POPs in unexpected ways.

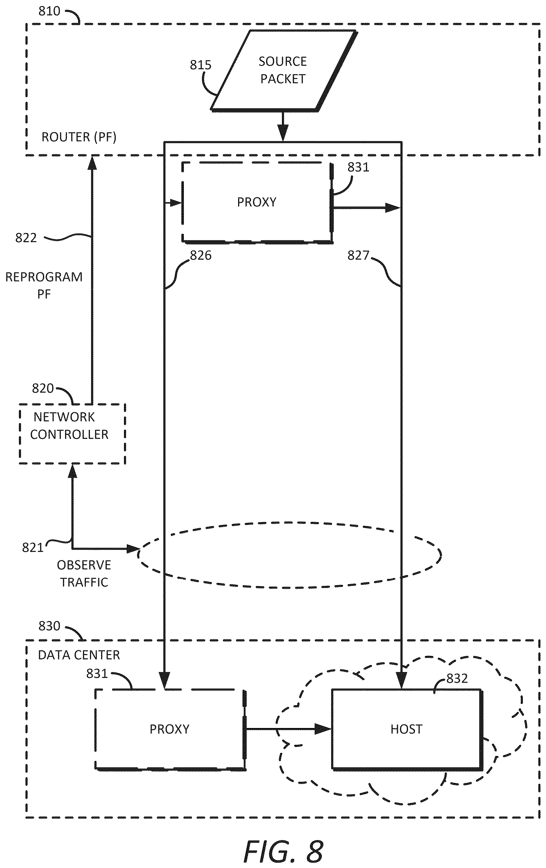

FIG. 8 is a process flow diagram for routing network data packets to a virtual network host with selective use of a proxy machine. A user device 810 such as a router or PF processes a source data packet 815 that is to be sent to the virtual cloud network at the data center 830. The device 810 may be located in a defined region at the edge of the cloud network, or the device 810 may be remotely located at the edge of the cloud network and not identified with a defined region. By default, data packet 815 is sent through proxy 831. Proxy 831 can be located within a data center 830. In some instances, proxy 831 may be located at the network edge near device 810. The source data packet 815 is observed 821 by a network control function 820. The network control function 820 includes software instructions executed by a network controller which analyze and calculate control functions for the network and configure network devices like router 810 to realize the desired flow of packets through the network. The network control function 820 observes 821 the source data packet 815 to determine if future data packets for the network flow corresponding to source data packet 815 no longer require processing at proxy machine 831 and, therefore, future data packets for the network flow corresponding to data packet 815 can go direct to network host 832. In response to the observation 821, the network control function 820 may update programming 822 in the router device 810 to alter the routing of future data packets for the network flow corresponding to data packet 815 to go direct to network host 832. The network control function 820 can observe 821 packet flows across the network, such as flows between PF 810 to Proxy 831. In cases where the network control function 820 observes large or "hot" flows, the network control function 820 can reprogram 822 the PF router 810 to send future packets 815 in the large flow directly to the network host 832. If the source data packet 815 does not require additional routing processing, then the source data packet 815 can be sent directly 827 to the cloud network host 832. In cases where the source data packet 815 does require additional routing processing from a proxy machine 831, the source data packet 815 is forwarded 826 to the proxy machine 831 for additional routing processing. The proxy machine 831 provides the completed routing information to the data packet and forwards the data packet to the cloud network host 832. It can be observed in the process of FIG. 8 that a portion of the network traffic originating from a user device 810 is moved directly from the user device 810 to the cloud network host 832. Persons of skill in the art will recognize that the observed network traffic 821 may alternatively cause the network control function 820 to update programming of device 810 to redirect traffic going directly 827 to the network host 832 through proxy 832. By way of example, observed traffic 821 may indicate that a network flow is no longer hot or if the device 810 can no longer handle the number of flows going through device 810. If space is required to handle high priority flows, then lower priority flows may be directed to the proxy 831 for further processing. If a flow ceases to exist, future network packets may be defaulted to being routed to the proxy 832. The remaining portion of the network traffic from the user device 810 is directed through the proxy machine 831. This reduces network congestion when compared to a process that moves all network traffic through a proxy machine.

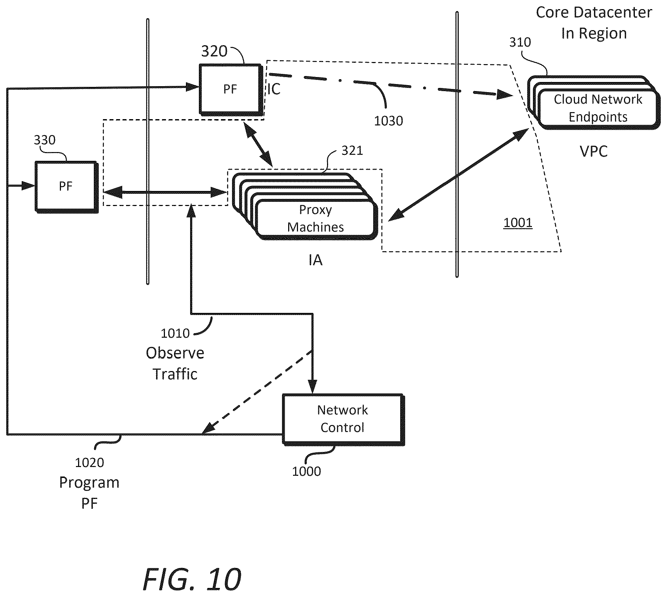

Referring now to FIG. 10, a block diagram illustrating network control in a cloud networking environment is shown. Customer network traffic can be initiated at a physical routing device provided by the cloud network provider 330, 320. Network traffic passing through PF 330, 320 is observed 1010 by a network control function 1000. Observation 1010 may alternatively be achieved by direct observation of packet information on PF 330, 320 or by comparable observation at proxy machines 321 or cloud endpoints 310. Based on a number of determining factors, the network control function 1000 recalculates desired routing for the network traffic 1001. Based on the calculated routing information, the network control function 1000 re-programs 1020 the physical routing devices 330, 320 to achieve desired routing. Using the updated programming, physical routing device 320 directs at least a portion of the network traffic 1030 directly to the cloud network 310, bypassing the proxy machines 321. While FIG. 10 shows physical routing device 320 redirecting a portion of the network traffic 1030 to the cloud endpoints 310 directly, it is understood that physical routing device 330 may also direct a portion of network traffic to bypass proxy machines 321 and send traffic directly to cloud endpoints 310. Further, any physical routing device associated with the cloud network may be controlled by network control function 1000 to direct a portion of its associated network traffic directly to the cloud endpoints 310 bypassing proxy machines 321. Network control function 1000 may alternatively control programming in physical routing device 330 to tunnel the outbound network traffic from a remote physical routing device (e.g., 330) to a local physical routing device such as physical routing device 320 as described above regarding FIG. 7.

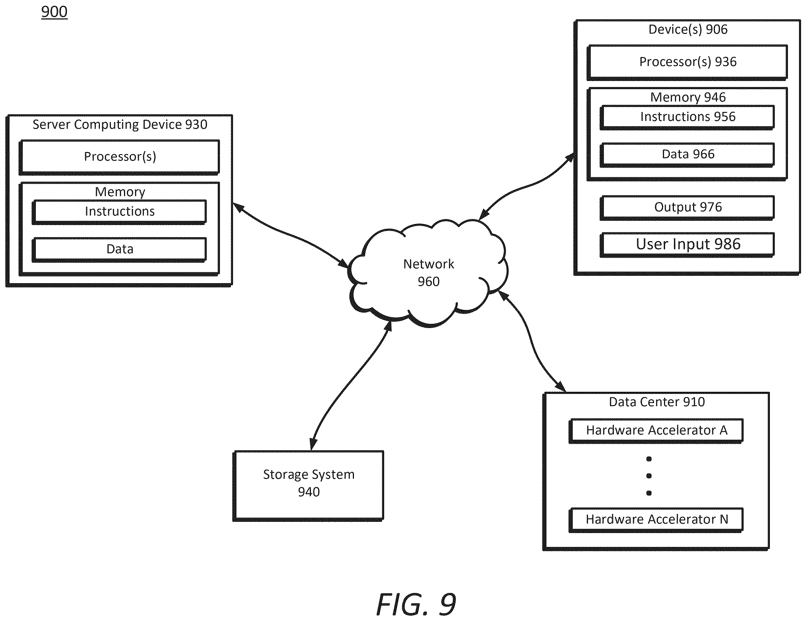

FIG. 9 is a block diagram of a system for providing cloud networking services. In this example, system 900 may include device(s) 906, server computing device 930, storage system 940, and network 960. Each device 906 may be a personal computing device intended for use by a respective user. The device 906 may include one or more processors 936, memory 946, data 966 and instructions 956. Each device 906 may also include an output 976 and user input 986. By way of example only, devices 906 may be mobile phones or devices such as a wireless-enabled PDA, smartphones, a tablet PC, a wearable computing device (e.g., a smartwatch, AR/VR headset, smart helmet, etc.), a netbook that is capable of obtaining information via the Internet or other networks, or a smart home device, such as a home assistant, smart thermostat, smart doorbell, smart light, etc.

Memory 946 of device 906 may store information that is accessible by processor 936. Memory 946 may also include data that can be retrieved, manipulated or stored by the processor 936. The memory 946 may be of any non-transitory type capable of storing information accessible by the processor 936, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. Memory 946 may store information that is accessible by the processors 936, including instructions 956 that may be executed by processors 936, and data 966.

Data 966 may be retrieved, stored or modified by processors 936 in accordance with instructions 956. For instance, although the present disclosure is not limited by a particular data structure, the data 966 may be stored in computer registers, in a relational database as a table having a plurality of different fields and records, XML documents, or flat files. The data 966 may also be formatted in a computer-readable format such as, but not limited to, binary values, ASCII or Unicode. By further way of example only, the data 966 may comprise information sufficient to identify the relevant information, such as numbers, descriptive text, proprietary codes, pointers, references to data stored in other memories (including other network locations) or information that is used by a function to calculate the relevant data.

The instructions 956 can be any set of instructions to be executed directly, such as machine code, or indirectly, such as scripts, by the processor 936. In that regard, the terms "instructions," "application," "steps," and "programs" can be used interchangeably herein. The instructions can be stored in object code format for direct processing by the processor, or in any other computing device language including scripts or collections of independent source code modules that are interpreted on demand or compiled in advance. Functions, methods and routines of the instructions are explained in more detail below.

The one or more processors 936 may include any conventional processors, such as a commercially available CPU or microprocessor. Alternatively, the processor can be a dedicated component such as an ASIC or other hardware-based processor. Although not necessary, computing devices 906 may include specialized hardware components to perform specific computing functions faster or more efficiently.

Although Figure 9 functionally illustrates the processor, memory, and other elements of devices 906 as being within the same respective blocks, it will be understood by those of ordinary skill in the art that the processor or memory may actually include multiple processors or memories that may or may not be stored within the same physical housing. Similarly, the memory may be a hard drive or other storage media located in a housing different from that of the devices 906. Accordingly, references to a processor or device will be understood to include references to a collection of processors, devices, or memories that may or may not operate in parallel.

Output 976 may be a display, such as a monitor having a screen, a touchscreen, a projector, or a television. The display 976 of the one or more computing devices 906 may electronically display information to a user via a graphical user interface ("GUI") or other types of user interfaces. For example, as will be discussed below, display 976 may electronically display query results.

The user input 986 may be a mouse, keyboard, touchscreen, microphone, or any other type of input.

The devices 906 can be at various nodes of a network 960 and capable of directly and indirectly communicating with other nodes of network 960. Although one device is depicted in Figure 9, it should be appreciated that a typical system can include one or more devices, with each device being at a different node of network 960. The network 960 and intervening nodes described herein can be interconnected using various protocols and systems, such that the network can be part of the Internet, World Wide Web, specific intranets, wide area networks, or local networks. The network 960 can utilize standard communications protocols, such as WiFi, Bluetooth, 4G, 5G, etc., that are proprietary to one or more companies. Although certain advantages are obtained when information is transmitted or received as noted above, other aspects of the subject matter described herein are not limited to any particular manner of transmission.

In one example, system 900 may include one or more server computing devices 930 having a plurality of computing devices, e.g., a load balanced server farm, that exchange information with different nodes of a network for the purpose of receiving, processing and transmitting the data to and from other computing devices. For instance, one or more server computing devices 930 may be a web server that is capable of communicating with the one or more client computing devices 906 via the network 960. In addition, server computing device 930 may use network 960 to transmit and present information to a user of one of the other computing devices 906.

Server computing device 930 may include one or more processors, memory, instructions, data, etc. These components operate in the same or similar fashion as those described above with respect to computing device 906.

According to some examples, the server computing device 930 may be connected over the network to a data center 910 housing any number of hardware accelerators. The data center 910 can be one of multiple data centers or other facilities in which various types of computing devices, such as hardware accelerators, are located. Computing resources housed in the data center can be specified for repeated results monitoring, including identifying repeated query results, or the like.

The server computing device 930 can be configured to receive queries from the client computing device 906 on computing resources in the data center 910. For example, the environment can be part of a computing platform configured to provide a variety of services to users, through various user interfaces and/or application programming interfaces (APIs) exposing the platform services. The variety of services can include identifying content responsive to the query, determining whether query results are repeated query results, or the like. The client computing device 906 can transmit input data associated with a query. The server computing device 930 can receive the input data and, in response, identify and provide for output query results. When identifying the query results, the server computing device 930 can generate a signature for the query results. The generated signature may be compared to other signatures associated with the query results and/or historical query signatures. Based on the comparison, the server computing device 930 can determine whether the query results are repeated query results. In examples where the query results are repeated query results, the server computing device 930 can enable one or more preventative measures.

According to some examples as described therein, a customer gains access to cloud networking resources through a customer device, such as a router providing a PO to the network. Due to limitations of remote equipment such as routers, complete routing information for data packets may not be available from the origin due to the dynamic nature of the network and security requirements. Proxy machines are placed at the network edge that serve as a proxy for routing network data packets to the virtual network Placing proxy machines at the network edge requires space, power and maintenance of the programmable processing machines serving as proxies. Techniques for bypassing proxy machines to reduce network congestion and latency are described. Data packets are selected to bypass proxies when additional routing information is not needed for the packet. Proxy machines may be implemented as virtual machines within a data center hosting the virtual network.

As other examples of potential services provided by a platform implementing the environment, the server computing device can maintain a variety of models in accordance with different constraints available at the data center. For example, the server computing device can maintain different families for deploying models on various types of TPUs and/or GPUs housed in the data center or otherwise available for processing.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus.

The term "configured" is used herein in connection with systems and computer program components. For a system of one or more computers to be configured to perform particular operations or actions means that the system has installed on its software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a stand-alone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back-end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements. The illustrations provided in the foregoing figures are provided by way of example and should not be considered limiting the scope of the disclosure or usefulness of the features described herein.

## Claims

1. A cloud networking architecture comprising:
a physical routing device having limitations that prevent complete routing information being available at origination of network traffic;
a remote host in a virtual network; and
a proxy machine for facilitating communication between the physical routing device and the remote host,
wherein the remote host is configured to determine routing information for outgoing data packets and route network communications from the virtual network to the physical routing device without passing through the proxy machine.

2. The cloud network architecture of claim 1, further comprising:
a network control module configured to observe network traffic from the physical routing device and program the physical routing device to route a first portion of the network traffic to the remote host and a second portion of the network traffic to the proxy machine.

3. The cloud network architecture of claim 2, further comprising a network control module configured to:
route network traffic based on a flow capacity to a data center where the remote host is located; and/or
wherein the network control module is further configured to:
direct a majority of network traffic directly from the physical routing device to the remote network hosts with the remainder of the network traffic directed to the proxy machine; and/or
wherein the network control module is further configured to:
add or remove network flows during network operations.

4. The cloud network architecture of any one of claims 1 to 3, further comprising:
a virtual machine running on the remote host, the virtual machine associated with a particular user.

5. The cloud network architecture of any one of claims 1 to 4, further comprising:
a data center housing the remote host, and
wherein optionally the proxy machine is a virtual machine located in the data center; and
wherein optionally the proxy machine comprises a plurality of shared virtual machines.

6. A method of routing traffic in a cloud network, comprising:
in a cloud network host, routing packets directly from the cloud network host to a remotely located physical routing device at a customer accessible point of presence (POP);
in the cloud network host, identifying packets from the physical routing device; and
in the cloud network host, selecting a first portion of the received packets and directly receiving the first portion of packets at the network host.

7. The method of claim 6, further comprising:
in the cloud network host, routing a remaining second portion of the received packets to a proxy located on an edge of the cloud network.

8. The method of claim 6, further comprising:
routing a remaining second portion of the received packets to a proxy, the proxy located in a data center.

9. The method of claim 8, further comprising:
routing the remaining second portion of the received packets to the proxy, wherein the proxy is a virtual machine running in the data center; and
further optionally comprising:
routing the remaining second portion of the received packets to the proxy, wherein the proxy is implanted in a plurality of shared virtual machines running in the data center; and
further optionally comprising:
selecting the first portion of the received packets based on a limitation of the remotely located physical routing device.

10. The method of any one of claims 6 to 9, further comprising:
selecting the first portion of the received packets based on limiting a flow of data packets to a specific network host of a plurality of network hosts in the cloud network.

11. The method of any one of claims 6 to 10, further comprising:
from a remote physical routing device, tunneling network traffic from the remote physical routing device to a local physical routing device within a local region of the cloud network.

12. The method of claim 11 further comprising:
retaining dynamic routing information relating to the local region of the cloud network in the local physical routing device.

13. The method of any one of claims 6 to 12, further comprising:
in a network control function, observing network traffic from a physical routing device; and
in response to the observation of the network traffic, the network control function updating programming information in the physical routing device, wherein a first portion of the observed network traffic is directly routed from the physical routing device to the cloud network host.

14. The method of claim 13, further comprising:
in response to the observation of the network traffic, the network control function updating programming information in the physical routing device, wherein a second portion of the observed network traffic is routed to a proxy machine, the proxy machine re-encapsulating data packets in the second portion of the observed network traffic to direct the data packets to a specific cloud network host in the cloud network.

15. A computer program comprising instructions that, when executed by one or more processors, causes the one or more processors to perform the method according to any one of claims 6 to 14.
